# EUROPEAN PATENT SPECIFICATION

(11) **EP 4 124 228 B1**
(45) Date of publication and mention of the grant of the patent: **22.10.2025**
(21) Application number: 22174004.6
(22) Date of filing: 18.05.2022
(51) Int. Cl.: A01D 34/66, A01D 34/73, A01G 3/06, A01D 34/84

(54) **HEAD FOR BRUSH CUTTERS**
KOPF FÜR BÜRSTENSCHNEIDER
TÊTE POUR COUPE-BROUSSAILLES

(30) Priority: 30.07.2021 IT 202100020423
(43) Date of publication of application: 01.02.2023
(73) Proprietor: Tecomec S.r.l., 42124 Reggio Emilia (IT)
(72) Inventor: CIGARINI, Enrico, 42123 REGGIO EMILIA (IT)
(74) Representative: Paparo, Aldo

(56) References cited:
- EP-A1- 3 607 812
- AU-B2- 522 302
- IT-A1- 201900 004 591

## Description

The invention relates to a cutting head for brush cutter machines.

Machines for cutting vegetation, such as brush cutters, can use different types of cutting tools, depending on the type of vegetation to be cut. The cutting tools are fixed in a cutting head, coupled to a rotating shaft of the brush cutter. When rotated with the cutting head about the axis of the shaft, the tool covers a circular surface which extends around the axis of the shaft, the diameter of this surface is called the cutting diameter. Said cutting diameter is the diameter of the circle described by the end of the cutting tool during the rotation of the cutting head.

Cutting filaments are a first type of cutting tool intended mainly for cutting grass or edging. Such cutting filaments are generally made of plastic obtained from an extrusion process. At least one filament is fixed in the cutting head and a free end of the filament exits from the head through an eyelet. Another embodiment of cutting head with cutting filaments is shown in EP3607812 mainly used for cutting weeds that grow between the joints of self-locking bricks. Cutting filaments can have several drawbacks. Firstly, such filaments are prone to abrasion or breakage, thus requiring frequent filament changes, which is annoying and time consuming. Furthermore, the energy consumption is high for large filament diameters. Furthermore, due to its flexibility, the filament tends to slam during its rotation, which generates a noticeable noise, requiring the user to wear individual hearing protection. Lastly, the cutting heads configured to receive the filaments usually have a complex design and can be difficult to use, especially for non-professional users.

Plastic cutting blades are a second type of cutting tool having a shape similar to the blade of a knife, mainly intended for cutting dense or hard vegetation. However, such cutting blades are affected by several disadvantages. Firstly, the blade can break into several pieces following an impact on a particularly hard obstacle, such as a stone, a log or a tree trunk, etc. These pieces can be projected several metres around the cutting head with the risk of seriously injuring the user or other people nearby. Furthermore, depending on the shape of the blades and the way they are fastened to the cutting head, the energy consumption of the brush cutter can be very high. Lastly, the cutting blades are usually much more expensive than the cutting filaments.

Metal discs are a third type of cutting tool, mainly used in regions with dense or dry vegetation. Metal discs also have a number of drawbacks, in particular the generation of sparks resulting from contact with a stone, which can trigger a fire. Furthermore, such discs are very dangerous to use due to the high risk of injury. Lastly, similar to plastic cutting blades, metal discs can also break into different pieces following an impact with a hard obstacle.

To date, none of the above-mentioned cutting tools provides a fully satisfactory solution.

In particular, there is a growing demand for machines for cutting vegetation with a mulching function. Such machines allow to cut the vegetation into small pieces which dry quickly and are therefore able to decompose easily in the soil. With such machines the user is not required to collect the vegetation residues after cutting, thus avoiding a tiring job and saving a great deal of time. Furthermore, said vegetation residues contribute to the fertilisation of the soil.

Energy consumption is also a growing problem for brush cutters. These machines are often fuelled with gasoline, especially for professional use where the machine must be used for several hours at a time.

In order to reduce the air pollution caused by petrol engines, electrically powered brush cutters have been developed. To this end, the machine for cutting vegetation is connected to an electric battery which is located for example in a rucksack held by a user.

However, the power and autonomy of these brush cutters remain limited. In particular, the energy consumption of the machine is linked to the aerodynamic resistance and the cutting efficiency of the tool used (cutting filament or blade). The battery level can thus rapidly decrease. Consequently, battery-powered lawnmowers are mainly dedicated to non-professional use.

To make electrically powered machines for cutting vegetation compatible with professional use, the energy consumption should be greatly reduced. Therefore, an object of the invention is to design a cutting head which overcomes the aforementioned disadvantages related to the existing cutting tools, provides a mulching function and minimises the energy consumption of a brush cutter.

To this end, the object of the invention is to define a cutting head for a brush cutting machine, according to claim 1.

In the present text, the term "planar" means that the cutting element generally extends in at least two directions of a plane, as opposed to a cutting filament which is considered, in the context of the present text, as a linear cutting tool, as it extends mainly along a main direction of a plane. In particular, the cutting edge of the disc extends in a plane. Said plane is typically perpendicular to the axis of rotation of the disc.

In the present text, the term "coplanar" means that a group of cutting elements lies on the same plane or at the same height with respect to a reference surface.

In the present text, the term "freely rotatable" means that the cutting disc can make full rotations about the pin (a complete rotation covering an angular sector of 360°), in both directions. In this regard, the cutting head does not comprise any component capable of limiting the rotation range of the cutting disc. When the cutting head rotates within a certain speed range, the centrifugal force applied to the cutting disc can cause the disc to block against the pin by means of a support pillar. Thus, the cutting disc rotates at the same speed as the head and acts as a cutting edge of the head. However, in the event of an impact on a significant obstacle, the force exerted by the obstacle on the disc can cancel the action of the support pillar and rotate the disc in a direction opposite the rotation direction of the head, which prevents the breakage of the disc and reduces the energy consumption of the machine because the rotation speed of the head always remains constant despite the impacts with the vegetation.

Furthermore, the arrangement of the cutting discs in different planes allows to capture the vegetation between two discs and cut it into small pieces. Therefore, the cutting head also has a mulching function, by virtue of which the user does not have to collect the vegetation residues after cutting.

The dependent claims correspond to possible embodiments of the invention.

Further features and advantages of the present invention will become more apparent from the following indicative and therefore non-limiting description,
of a preferred but not exclusive embodiment of a brush cutter head as illustrated in the accompanying drawings in which:

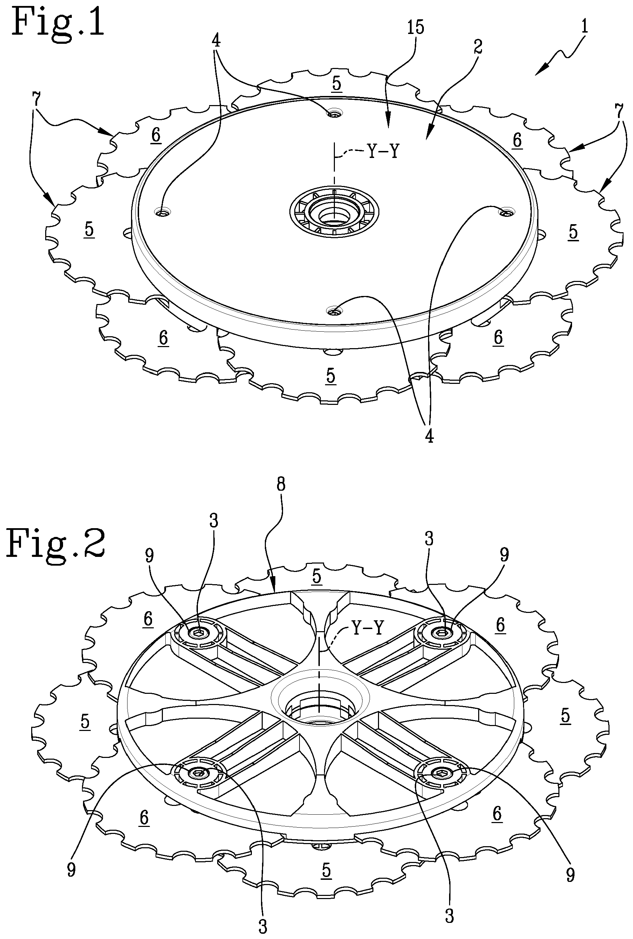

- figure 1 is a perspective view from below of a head in accordance with the present invention;
- figure 2 is a perspective view from above of the head of figure 1 with some parts removed to better highlight others;

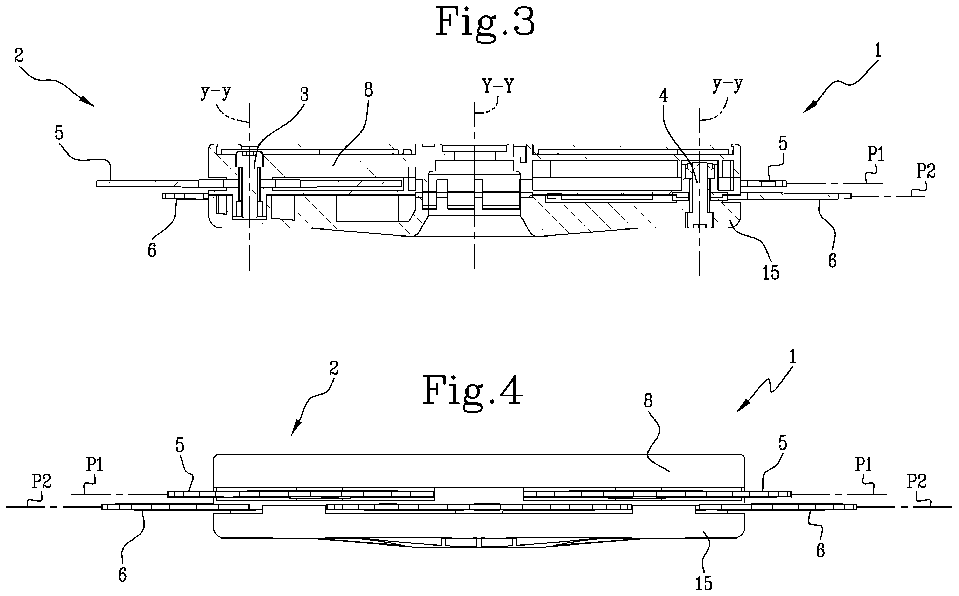

- figure 3 is a transversal sectional view of the head of figures 1 and 2;
- figure 4 is a lateral view of the head;

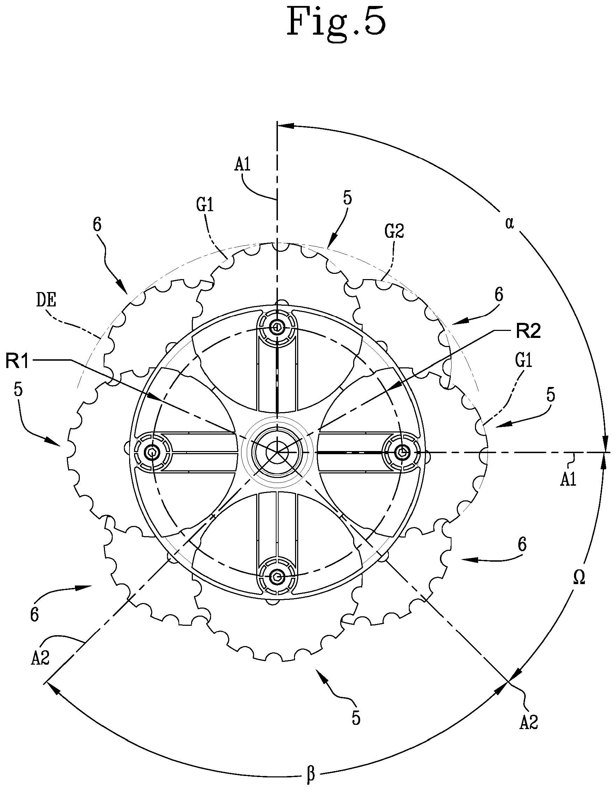

- figure 5 is a projection plan view of the head;
- figure 6 is an exploded view of the head;

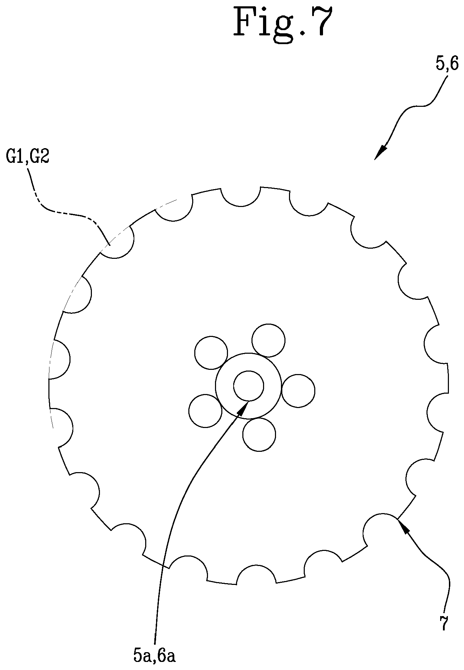

- figure 7 illustrates a detailed view of a component of the head.

With reference to the accompanying figures, the number 1 indicates overall a head for brush cutters suitable for cutting grass and herbaceous plants and in particular suitable for mulching-effect cutting.

The term mulching generally refers to covering the soil with a layer of material, preferably organic, in order to create a layer above that of the turf which is adapted to maintain soil moisture, protecting the soil from erosion and avoiding the formation of the so-called surface crust.

Organic materials for mulching can be among the most varied. To name a few: straw, dried leaves, bark, and mowing grass. Mulching-effect cutting is an operation through which the brush cutter, due to the centrifugal force exerted by the brush cutter to the head at the same time as cutting the grass, spreads the cut grass around the area in which the cutting has just been carried out.

The head 1 can be associated with a brush cutter, which is substantially known and therefore not illustrated. A rotary motion is transmitted through a motor, whether by means of a spark or battery, to a drive shaft connected at one end to the motor and at the other end to the support element 2.

The support element 2 has a vertical axis Y-Y about which it can rotate when moved by the drive shaft.

The support element 2 generally has a circular or otherwise axial symmetrical shape so as not to induce imbalances to the drive shaft during the rotation about its axis.

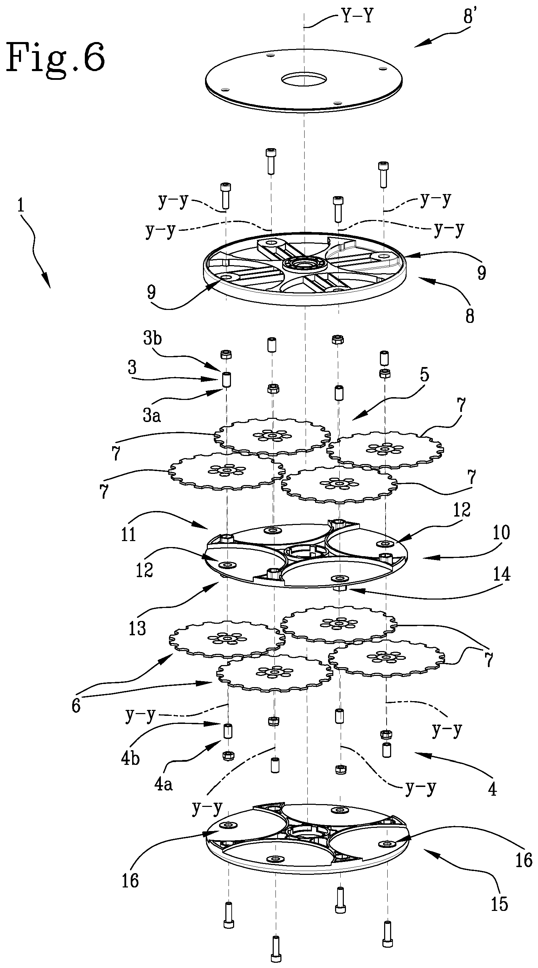

In a preferred embodiment, illustrated in greater detail in figure 6, the support element 2 comprises an upper element 8 (optionally covered by a casing 8'), an intermediate element 10 and a lower element 15. The aforesaid three elements are removable from each other in an open configuration, in which they are spaced apart from one another, to replace the cutting elements 5, better described below, to an assembled configuration, in which they are packed together, during which the operator proceeds to cut the grass.

The intermediate element 10 has a first and a second side 11, 13 opposite each other.

The first side 11 faces the upper element 8 and in the distanced configuration is away from the upper element 8 while in the mounted configuration it is closed in a pack against the upper element 8.

The second side 13 faces the lower element 15 and in the distanced configuration is away from the lower element 15 while in the mounted configuration it is closed in a pack against the lower element 15.

The support element 2 includes a series of first pins 3 and a series of second pins 4. As can be seen in the accompanying drawings, the first pins 3 include a radial distribution on the support element 2 and, similarly, the second pins 4 also include a radial distribution on the support element 2. In particular, in the preferred embodiment illustrated, the series of second pins 4 is angularly spaced with respect to the series of first pins 3.

Thereby every first pin 3 is flanked by a pair of second pins 4 and vice versa every second pin 4 is flanked by a pair of first pins 3.

Each pin, belonging to the first or second series 3,4 preferably has a cylindrical shape with a base 3a or 4a, a top 3b or 4b and an extension axis y-y preferably parallel to the vertical axis Y-Y of the support element 2.

The series of first pins 3 is distributed over a first radius R1 of the support element 2 and the series of second pins 4 is distributed over a second radius R2 of the support element 2.

The first and second radii R1 and R2 are centred on the vertical axis Y-Y. The first and second radii R1 and R2 preferably have the same amplitude. Without leaving the field of protection of the present invention, R1 and R2 can have different amplitudes.

The extension axis y-y of each pin belonging to the series of first pins 3 lies on a circumference having radius R1 and centre in the vertical axis Y-Y.

The extension axis y-y of each pin belonging to the second series of pins 4 lies on a circumference having radius R2 and centre in the vertical axis Y-Y.

The series of first pins 3 is distributed on first radial generatrices A1, all passing through the vertical axis Y-Y of the support element 2, spaced apart from one another by a first angle α, preferably comprised between 15 and 90 degrees.

In other words, the first angle α is the angle subtended between two contiguous pins belonging to the series of first pins 3, i.e., the angle subtended between two first radial generatrices A1.

The series of second pins 4 is distributed on second radial generatrices A2, all passing through the vertical axis Y-Y of the support element 2, spaced apart from one another by a second angle β, preferably comprised between 15 and 90 degrees.

As before, the second angle β is the angle subtended between two contiguous pins belonging to the series of second pins 4, i.e., the angle subtended between two second radial generatrices A2.

Each first angle α, subtended by the pair of first radial generatrices A1 (defined by a pair of first contiguous pins 3), is spaced apart from each second angle β, subtended by a pair of second radial generatrices A2 (contiguous to the pair of first radial generatrices A1 and defined by a pair of second pins 4), by a third angle Ω, preferably comprised between 7.5 and 45 degrees.

To provide an example, illustrated in the accompanying drawings, a pin, belonging to the first series of pins 3, is spaced apart from a contiguous pin belonging to the same series of first pins 3 by a first angle α equal to 90 degrees, and a pin belonging to the second series 4, is spaced apart from a contiguous pin belonging to the same series of second pins 4 by a second angle β equal to 90 degrees. The first angle α is then spaced apart from the second angle β by a third angle Ω equal to 45 degrees.

With reference to the preferred coupling between the first and second series of pins 3, 4 and the discoid element 2, it can be seen that the support element 2 is engaged, through the upper element 8 and the intermediate element 10, with the series of first pins 3 and, through the lower element 15 and the intermediate element 10, with the series of second pins 4.

In more detail, the upper element 8 has a plurality of upper seats 9.

At the first side 11 there is a plurality of upper intermediate seats 12 facing and in axis with the plurality of upper seats 9 so as to accommodate and trap the series of first pins 3.

Said plurality of upper intermediate seats 12 and plurality of upper seats 9 cooperate with each other to intercept the series of first pins 3.

At the second side 13 there is a plurality of lower intermediate seats 14 facing and in axis with a corresponding plurality of lower seats 16 obtained in the lower element 15.

Also in this case, the plurality of lower intermediate seats 14 collaborates with the plurality of lower seats 16 to intercept the series of second pins 4.

On the series of first pins 3 a first plurality of cutting elements 5 are coupled and on the series of second pins 4 a second plurality of cutting elements 6 are coupled.

As can be seen in the accompanying drawings, the first and second plurality of cutting elements 5, 6 are preferably defined by a plurality of discoid elements each having a plurality of teeth 7 on the periphery thereof.

Without leaving the field of protection of the present invention, each cutting element belonging to the respective pluralities 5,6 can take any form such as: polygonal blades, triangular blades, elliptical blades.

The coupling between the series of first pins 3 and the corresponding first plurality of cutting elements 5 and between the series of second pins 4 and the corresponding second plurality of cutting elements 6 is preferably of the idle type.

In other words, each cutting element has a central hole 5a or 6a having a greater diameter with than the outer diameter of the corresponding pin 3 or 4 to which it couples.

Various rotation configurations of the plurality of cutting elements 5, 6 with respect to the support element 2 can thus be obtained. At a first angular acceleration speed of the support element 2, the plurality of cutting elements 5,6 can result in a rest position and can rotate on the axis y-y thereof with speeds synchronous to each other. When the angular speed of the support element has reached the operating speed, the plurality of cutting elements 5,6 can rotate on the axis y-y thereof with synchronous speeds.

With reference to the first plurality of cutting elements 5, each cutting element is coplanar with the other cutting elements belonging to the plurality 5. Thereby, each cutting element belonging to the first plurality 5 lies with the other cutting elements on a first cutting plane P1.

Likewise, the second plurality of cutting elements 6 have all the cutting elements coplanar with each other so as to define a second cutting plane P2. In other words, each cutting element belonging to the second plurality lies with the other cutting elements on a second cutting plane P2.

The first and second cutting planes P1 and P2 are parallel and distanced from each other by a spacing comprised between 0.5 mm and 10 mm.

As a result of the idle coupling between the series of first pins 3 and the respective first plurality of cutting elements 5 and between the series of second pins 4 and the respective second plurality of cutting elements 6, upon rotation of the support element 2 the cutting elements can rotate with synchronous or asynchronous speed.

Thereby, as a result of the possible different rotation of the cutting elements 5, 6 and as a result of the arrangement on two cutting planes P1, P2 thereof, the grass is not cut in a single point but is cut in several points, then chopped, thus achieving the mulching-effect cutting.

The arrangement of the first plurality of cutting elements 5 and the second plurality of cutting elements 6 is alternating.

In other words, each cutting element 5 belonging to the first plurality of cutting elements 5 is interposed between a pair of cutting elements 6 belonging to the second plurality of cutting elements 6. And vice versa.

In other words, each first cutting element 5 has in a near position a pair of second cutting elements 6, distributed on the second cutting plane P2 and on opposite sides with respect to the first pin 3 on which the first cutting element 5 is coupled, and in a distanced position with respect to a pair of first cutting elements 5, distributed on the first cutting plane P1 and on opposite sides with respect to the first pin 3 on which the first cutting element 5 is coupled.

Each second cutting element 6 has in a near position a pair of first cutting elements 5, distributed on the first cutting plane P1 and on opposite sides with respect to the second pin 4 on which the second cutting element 6 is coupled, and in a distanced position with respect to a pair of second cutting elements 6, distributed on the second cutting plane P2 and on opposite sides with respect to the second pin 4 on which the second cutting element 6 is coupled.

Each cutting element 5, when rotated by the support element 2, defines a first circular generatrix G1. Likewise, each cutting element 6, when rotated by the support element 2, defines a second circular generatrix G2.

Taking a horizontal plane as a reference, when the support element 2 includes the vertical axis Y-Y thereof in a position perpendicular to the aforesaid horizontal plane, a first circular generatrix G1, defined by a first cutting element 5, is on opposite sides that are tangent or secant to a pair of second circular generatrices G2, defined by a second pair of cutting elements 6, adjacent to the first cutting element 5.

Likewise, a second circular generatrix G2, defined by a second cutting element 6, is on opposite sides that are tangent or secant to a pair of first circular generatrices G1 defined by a first pair of cutting elements 5 contiguous with the second cutting element 6.

Thereby, the head 1 has an outer cutting diameter DE, when the head 1 is at rest, which is the closest to a circumference. Through this particular arrangement of the cutting elements it is possible to generate an outer cutting diameter DE of the head with the least number of recesses. In doing so, when the support element 2 is rotated, the head 1 achieves a more uniform cutting behaviour. Secondly, if the support element is unintentionally directed against an obstacle, the cutting elements 5, 6 absorb and distribute the impact so as to induce less vibration to the brush cutter and so as to safeguard the integrity of the cutting elements 5, 6 as much as possible.

As can be seen from the accompanying drawings, said first and second plurality of cutting elements 5, 6 each comprise a number of cutting elements comprised between 3 and 6, preferably 4 cutting elements for each plurality of cutting elements 5,6.

It is therefore noted that the present invention achieves the proposed objects by making a head which is capable of cutting the grass even with the mulching effect.

Due to the arrangement of the cutting elements on two cutting planes P1 and P2 it is possible to cut the grass in several points rather than in a single point.

Secondly, the arrangement of the cutting elements allows to reduce the noise of the tool during the working steps, to minimise vibrations due to impacts with obstacles and to safeguard the duration of the cutting tools as much as possible.

## Claims

1. A head (1) for a brush cutter, suitable for cutting grass and herbaceous plants and in particular for cutting with a mulching effect, of the type comprising:
- a support element (2), connectable to a drive shaft of the brush cutter so as to be set in rotation about a vertical axis thereof (Y-Y);
- a series of first pins (3) radially distributed over the support element (2);
- a series of second pins (4) radially distributed over the support element (2); said series of second pins (4) being angularly spaced relative to the series of first pins (3);
- a first plurality of cutting elements (5) coupled to the series of first pins (3); each cutting element (5) having its own rotation axis (y-y) and being induced to rotate about its axis (y-y) due to the rotation of the support element (2), thereby defining a respective first circular cutting generatrix (G1);
- a second plurality of cutting elements (6) coupled to the series of second pins (4); each cutting element (6) having its own rotation axis (y-y) and being induced to rotate about its axis (y-y) due to the rotation of the support element (2), thereby defining a respective second circular cutting generatrix (G2);
- each first cutting element (5) is coplanar with the other cutting elements belonging to the first plurality (5) so as to define a first cutting plane (P1);
- each second cutting element (6) is coplanar with the other cutting elements belonging to the second plurality (6) so as to define a second cutting plane (P2) distanced from the first cutting plane (P1);
- said first plurality of cutting elements (5) is distributed over an angular sector of 360°, with an alternating arrangement relative to said second plurality of cutting elements (6) and vice versa, so that each first cutting element (5) is interposed between a pair of cutting elements belonging to the second plurality of cutting elements (6) and each second cutting element (6) is interposed between a pair of cutting elements belonging to the first plurality of cutting elements (5);
**characterised in that**:
- each pin, belonging to the first or second series (3,4), having a cylindrical shape with a base (3a or 4a), a top (3b or 4b) and an extension axis (y-y) preferably parallel to the vertical axis (Y-Y) of the support element (2);
- the coupling between the series of first pins (3) and the corresponding first plurality of cutting elements (5), and between the series of second pins (4) and the corresponding second plurality of cutting elements (6) being idle.

2. The head (1) according to claim 1, wherein each first cutting element (5) has, in a near position, a pair of second cutting elements (6), distributed over the second cutting plane (P2) and on opposite sides relative to the first pin (3) onto which the first cutting element (5) is coupled and, in a distanced position, a pair of first cutting elements (5), distributed over the first cutting plane (P1) and on opposite sides relative to the first pin (3) onto which the first cutting element (5) is coupled and wherein each second cutting element (6) has, in a near position, a pair of first cutting elements (5), distributed over the first cutting plane (P1) and on opposite sides relative to the second pin (4) onto which the second cutting element (6) is coupled and in a distanced position a pair of second cutting elements (6), distributed over the second cutting plane (P2) and on opposite sides relative to the second pin (4) onto which the second cutting element (6) is coupled.

3. The head (1) according to claim 1 or 2, wherein said series of first pins (3), is distributed over a first radius (R1) of the support element (2) and said series of second pins (4) is distributed over a second radius (R2) of the support element (2); said first radius (R1) preferably having an extent that is substantially equal to that of the second radius (R2).

4. The head (1) according to any one of the preceding claims, wherein said series of first pins (3) is distributed over first radial generatrices (A1), all passing through the axis (Y-Y) of the support element (2), spaced apart from one another by a first angle (α), and wherein said series of second pins (4) is distributed over second radial generatrices (A2), all passing through the axis (Y-Y) of the support element (2), spaced apart from one another by a second angle (β); said first angle (α), defined between a pair of first radial generatrices (A1), being spaced apart from a second contiguous angle (β), defined by a pair of second radial generatrices (A2) contiguous to the pair of first radial generatrices (A1), by a third angle (Ω).

5. The head (1) according to any one of the preceding claims, wherein, when the support element (2) has its vertical axis (Y-Y) perpendicular to a horizontal plane, the projection of a first cutting generatrix (G1) on the horizontal plane, belonging to a first cutting element (5), is tangent or secant, on opposite sides, to the projections of two respective second generatrices (G2) belonging to a pair of corresponding second cutting elements (6) contiguous to the first cutting element (5) and the projections of a second cutting generatrix (G2) on the horizontal plane, belonging to a second cutting element (6), is tangent or secant, on opposite sides, to the projections of two respective first generatrices (G1) belonging to a pair of corresponding first cutting elements (5) contiguous to the second cutting element (6) .

6. The head (1) according to any one of the preceding claims, wherein the first and second plurality of cutting elements (5) are defined by discoid elements, each having a plurality of teeth (7) on the periphery thereof.

7. The head (1) according to claim 1, wherein said support element (2) comprises:
- an upper element (8), preferably having a discoid shape and having a plurality of upper seats (9);
- an intermediate element (10), coupled to the upper element (8), having on a first side (11), facing the upper element (8), a plurality of upper intermediate seats (12) and, on a second side (13), opposite the first side (11), a plurality of lower intermediate seats (14); said plurality of upper seats (9) and said plurality of upper intermediate seats (12) retaining inside them the series of first pins (3) by virtue of the coupling of the intermediate element (10) to the upper element (8);
- a lower element (15), preferably having a discoid shape, facing the second side (13) and coupled to the intermediate element (10) and having a plurality of lower seats (16); said plurality of lower seats (16) and said plurality of lower intermediate seats (14) retaining inside them the series of second pins (4) by virtue of the coupling of the intermediate element (10) to the lower element (15).

8. The head (1) according to claim 1, wherein said first and said second plurality of cutting elements (5,6) each comprises a number of cutting elements comprised between 3 and 6, preferably 4 cutting elements for every plurality of cutting elements (5,6).

9. The head (1) according to claim 1, wherein said first cutting plane (P1) is set at a distance from the second cutting plane (P2) comprised between 0.5 and 10 mm.

## Patentansprüche

1. Kopf (1) für Bürstenschneider, der geeignet ist, um Gras und Krautpflanzen zu schneiden und insbesondere, um mit einem Mulcheffekt zu schneiden, vom Typ, der Folgendes umfasst:
- ein Stützelement (2), das mit einer Antriebswelle des Bürstenschneiders verbindbar ist, sodass es um eine vertikale Achse davon (Y-Y) in Drehung versetzt wird;
- eine Reihe erster Stifte (3), die radial über das Stützelement (2) verteilt sind;
- eine Reihe zweiter Stifte (4), die radial über das Stützelement (2) verteilt sind, wobei die Reihe zweiter Stifte (4) winkelig relativ zu der Reihe erster Stifte (3) beabstandet ist;
- eine erste Vielzahl von Schneidelementen (5), die mit der Reihe erster Stifte (3) gekoppelt sind, wobei ein jedes Schneidelement (5) seine eigene Rotationsachse (y-y) aufweist und veranlasst wird, sich um seine eigene Achse (y-y) aufgrund der Drehung des Stützelements (2) zu drehen, wodurch eine jeweilige erste kreisförmige schneidende Erzeugende (G1) definiert wird;
- eine zweite Vielzahl von Schneidelementen (6), die mit der Reihe zweiter Stifte (4) gekoppelt sind, wobei ein jedes Schneidelement (6) seine eigene Rotationsachse (y-y) aufweist und veranlasst wird, sich um seine eigene Achse (y-y) aufgrund der Drehung des Stützelements (2) zu drehen, wodurch eine jeweilige zweite kreisförmige schneidende Erzeugende (G2) definiert wird;
- jedes erste Schneidelement (5) liegt in der gleichen Ebene mit den anderen Schneidelementen, die der ersten Vielzahl (5) angehören, sodass eine erste Schneidebene (P1) definiert wird;
- jedes zweite Schneidelement (6) liegt in der gleichen Ebene mit den anderen Schneidelementen, die der zweiten Vielzahl (6) angehören, sodass eine zweite Schneidebene (P2) definiert wird, die von der ersten Schneidebene (P1) beabstandet ist;
- die erste Vielzahl von Schneidelementen (5) ist über einen Winkelsektor von 360° verteilt, mit einer abwechselnden Anordnung relativ zur zweiten Vielzahl von Schneidelementen (6) und umgekehrt, sodass jedes erste Schneidelement (5) zwischen einem Paar von Schneidelementen eingesetzt ist, die der zweiten Vielzahl von Schneidelementen (6) angehören, und jedes zweite Schneidelement (6) zwischen einem Paar von Schneidelementen eingesetzt ist, die der ersten Vielzahl von Schneidelementen (5) angehören,
**dadurch gekennzeichnet, dass**
- jeder Stift, der der ersten oder zweiten Reihe (3, 4) angehört, eine zylindrische Form mit einer Basis (3a oder 4a), einer Oberseite (3b oder 4b) und einer Ausdehnungsachse (y-y) aufweist, die vorzugsweise parallel zur vertikalen Achse (Y-Y) des Stützelements (2) verläuft;
- die Kopplung zwischen der Reihe erster Stifte (3) und der entsprechenden ersten Vielzahl von Schneidelementen (5) und zwischen der Reihe zweiter Stifte (4) und der entsprechenden zweiten Vielzahl von Schneidelementen (6) leerlaufend ist.

2. Kopf (1) nach Anspruch 1, wobei jedes erste Schneidelement (5) in einer nahen Position ein Paar von zweiten Schneidelementen (6) aufweist, die über die zweite Schneidebene (P2) und auf entgegengesetzten Seiten relativ zum ersten Stift (3), auf dem das erste Schneidelement (5) gekoppelt ist, verteilt sind, und in einer beabstandeten Position ein Paar von ersten Schneidelementen (5), die über die erste Schneidebene (P1) und auf entgegengesetzten Seiten relativ zum ersten Stift (3), auf dem das erste Schneidelement (5) gekoppelt ist, verteilt sind, und wobei jedes zweite Schneidelement (6) in einer nahen Position ein Paar von ersten Schneidelementen (5) aufweist, die über die erste Schneidebene (P1) und auf entgegengesetzten Seiten relativ zum zweiten Stift (4), auf dem das zweite Schneidelement (6) gekoppelt ist, verteilt sind, und in einer beabstandeten Position ein Paar von zweiten Schneidelementen (6), die über die zweite Schneidebene (P2) und auf entgegengesetzten Seiten relativ zum zweiten Stift (4), auf dem das zweite Schneidelement (6) gekoppelt ist, verteilt sind.

3. Kopf (1) nach Anspruch 1 oder 2, wobei die Reihe erster Stifte (3) über einen ersten Radius (R1) des Stützelements (2) verteilt ist und die Reihe zweiter Stifte (4) über einen zweiten Radius (R2) des Stützelements (2) verteilt ist, wobei der erste Radius (R1) vorzugsweise eine Ausdehnung aufweist, die im Wesentlichen gleich der des zweiten Radius (R2) ist.

4. Kopf (1) nach einem der vorhergehenden Ansprüche, wobei die Reihe erster Stifte (3) über ersten radialen Erzeugenden (A1) verteilt ist, die alle durch die Achse (Y-Y) des Stützelements (2) führen, voneinander beabstandet um einen ersten Winkel (a), und wobei die Reihe zweiter Stifte (4) über zweiten radialen Erzeugenden (A2) verteilt ist, die alle durch die Achse (Y-Y) des Stützelements (2) führen, voneinander beabstandet um einen zweiten Winkel (β), wobei der erste Winkel (a), der zwischen einem Paar von ersten radialen Erzeugenden (A1) definiert ist, von einem zweiten angrenzenden Winkel (β), der durch ein Paar von zweiten radialen Erzeugenden (A2) angrenzend an das Paar von ersten radialen Erzeugenden (A1) definiert ist, um einen dritten Winkel (Ω) beabstandet ist.

5. Kopf (1) nach einem der vorhergehenden Ansprüche, wobei die Projektion einer ersten schneidenden Erzeugenden (G1), wenn die vertikale Achse (Y-Y) des Stützelements (2) senkrecht zu einer horizontalen Ebene angeordnet ist, auf die horizontale Ebene, die zu einem ersten Schneidelement (5) angehört, tangential oder schneidend auf entgegengesetzten Seiten zu den Projektionen von zwei jeweiligen zweiten Erzeugenden (G2) verläuft, die einem Paar von entsprechenden zweiten Schneidelementen (6) angehören, die an das erste Schneidelement (5) angrenzen, und die Projektion einer zweiten schneidenden Erzeugenden (G2) auf die horizontale Ebene, die zu einem zweiten Schneidelement (6) angehört, tangential oder schneidend auf entgegengesetzten Seiten zu den Projektionen von zwei jeweiligen ersten Erzeugenden (G1) verläuft, die einem Paar von entsprechenden ersten Schneidelementen (5) angehören, die an das zweite Schneidelement (6) angrenzen.

6. Kopf (1) nach einem der vorhergehenden Ansprüche, wobei die erste und zweite Vielzahl von Schneidelementen (5) durch scheibenförmige Elemente definiert sind, die jeweils eine Vielzahl von Zähnen (7) auf ihrem Umfang aufweisen.

7. Kopf (1) nach Anspruch 1, wobei das Stützelement (2) Folgendes umfasst:
- ein oberes Element (8), das vorzugsweise eine scheibenförmige Form aufweist und eine Vielzahl von oberen Sitzen (9) aufweist;
- ein Zwischenelement (10), das mit dem oberen Element (8) gekoppelt ist, aufweisend auf einer ersten Seite (11), die dem oberen Element (8) zugewandt ist, eine Vielzahl von oberen Zwischensitzen (12) und auf einer zweiten Seite (13), die der ersten Seite (11) entgegengesetzt ist, eine Vielzahl von unteren Zwischensitzen (14), wobei die Vielzahl von oberen Sitzen (9) und die Vielzahl von oberen Zwischensitzen (12) in ihrem Inneren die Reihe erster Stifte (3) kraft der Kopplung des Zwischenelements (10) mit dem oberen Element (8) halten;
- ein unteres Element (15), das vorzugsweise eine scheibenförmige Form aufweist, das der zweiten Seite (13) zugewandt und mit dem Zwischenelement (10) gekoppelt ist und eine Vielzahl von unteren Sitzen (16) aufweist, wobei die Vielzahl von unteren Sitzen (16) und die Vielzahl von unteren Zwischensitzen (14) in ihrem Inneren die Reihe zweiter Stifte (4) kraft der Kopplung des Zwischenelements (10) mit dem unteren Element (15) halten.

8. Kopf (1) nach Anspruch 1, wobei die erste und zweite Vielzahl von Schneidelementen (5, 6) jeweils eine Anzahl von Schneidelementen zwischen 3 und 6, vorzugsweise 4 Schneidelemente für jede Vielzahl von Schneidelementen (5, 6), umfassen.

9. Kopf (1) nach Anspruch 1, wobei die erste Schneidebene (P1) in einem Abstand von der zweiten Schneidebene (P2) zwischen 0,5 und 10 mm platziert ist.

## Revendications

1. Tête (1) pour coupe-broussailles, adaptée pour couper l'herbe et les plantes herbacées et en particulier pour couper avec un effet de paillage, du type comprenant :
- un élément de support (2), pouvant être relié à un arbre d'entraînement du coupe-broussailles de manière à être mis en rotation autour d'un axe vertical de celui-ci (Y-Y) ;
- une série de premières broches (3) réparties radialement par-dessus l'élément de support (2) ;
- une série de secondes broches (4) réparties radialement par-dessus l'élément de support (2) ; ladite série de secondes broches (4) étant espacée angulairement par rapport à la série de premières broches (3) ;
- une première pluralité d'éléments de coupe (5) couplés à la série de premières broches (3) ; chaque élément de coupe (5) ayant son propre axe de rotation (y-y) et étant amené à tourner autour de son axe (y-y) en raison de la rotation de l'élément de support (2), définissant ainsi une première génératrice de coupe circulaire respective (G1) ;
- une seconde pluralité d'éléments de coupe (6) couplés à la série de secondes broches (4) ; chaque élément de coupe (6) ayant son propre axe de rotation (y-y) et étant amené à tourner autour de son axe (y-y) en raison de la rotation de l'élément de support (2), définissant ainsi une seconde génératrice de coupe circulaire respective (G2) ;
- chaque premier élément de coupe (5) est coplanaire avec les autres éléments de coupe appartenant à la première pluralité (5) de manière à définir un premier plan de coupe (P1) ;
- chaque second élément de coupe (6) est coplanaire avec les autres éléments de coupe appartenant à la seconde pluralité (6) de manière à définir un second plan de coupe (P2) éloigné du premier plan de coupe (P1) ;
- ladite première pluralité d'éléments de coupe (5) est répartie par-dessus un secteur angulaire de 360°, avec un agencement alterné par rapport à ladite seconde pluralité d'éléments de coupe (6) et vice versa, de sorte que chaque premier élément de coupe (5) est interposé entre une paire d'éléments de coupe appartenant à la seconde pluralité d'éléments de coupe (6) et chaque second élément de coupe (6) est interposé entre une paire d'éléments de coupe appartenant à la première pluralité d'éléments de coupe (5) ;
**caractérisée en ce que** :
- chaque broche, appartenant à la première ou à la seconde série (3, 4), ayant une forme cylindrique avec une base (3a ou 4a), un sommet (3b ou 4b) et un axe d'extension (y-y) de préférence parallèle à l'axe vertical (Y-Y) de l'élément de support (2) ;
- le couplage entre la série de premières broches (3) et la première pluralité correspondante d'éléments de coupe (5), et entre la série de secondes broches (4) et la seconde pluralité correspondante d'éléments de coupe (6) étant au repos.

2. Tête (1) selon la revendication 1, dans laquelle chaque premier élément de coupe (5) a, dans une position proche, une paire de seconds éléments de coupe (6), répartis par-dessus le second plan de coupe (P2) et sur des côtés opposés par rapport à la première broche (3) sur laquelle le premier élément de coupe (5) est couplé et, dans une position éloignée, une paire de premiers éléments de coupe (5), répartis par-dessus le premier plan de coupe (P1) et sur des côtés opposés par rapport à la première broche (3) sur laquelle le premier élément de coupe (5) est couplé et dans laquelle chaque second élément de coupe (6) a, dans une position proche, une paire de premiers éléments de coupe (5), répartis par-dessus le premier plan de coupe (P1) et sur des côtés opposés par rapport à la seconde broche (4) sur laquelle le second élément de coupe (6) est couplé et dans une position éloignée, une paire de seconds éléments de coupe (6), répartis par-dessus le second plan de coupe (P2) et sur des côtés opposés par rapport à la seconde broche (4) sur laquelle le second élément de coupe (6) est couplé.

3. Tête (1) selon la revendication 1 ou 2, dans laquelle ladite série de premières broches (3) est répartie par-dessus un premier rayon (R1) de l'élément de support (2) et ladite série de secondes broches (4) est répartie par-dessus un second rayon (R2) de l'élément de support (2) ; ledit premier rayon (R1) ayant de préférence une étendue qui est sensiblement égale à celle du second rayon (R2).

4. Tête (1) selon l'une quelconque des revendications précédentes, dans laquelle ladite série de premières broches (3) est répartie par-dessus des premières génératrices radiales (A1), toutes passant à travers l'axe (Y-Y) de l'élément de support (2), espacées l'une de l'autre d'un premier angle (a), et dans laquelle ladite série de secondes broches (4) est répartie par-dessus des secondes génératrices radiales (A2), toutes passant à travers l'axe (Y-Y) de l'élément de support (2), espacées l'une de l'autre d'un second angle (β) ; ledit premier angle (a), défini entre une paire de premières génératrices radiales (A1), étant espacé d'un second angle contigu (β), défini par une paire de secondes génératrices radiales (A2) contiguës à la paire de premières génératrices radiales (A1), d'un troisième angle (Ω).

5. Tête (1) selon l'une quelconque des revendications précédentes, dans laquelle, lorsque l'élément de support (2) a son axe vertical (Y-Y) perpendiculaire à un plan horizontal, la projection d'une première génératrice de coupe (G1) sur le plan horizontal, appartenant à un premier élément de coupe (5), est tangente ou sécante, sur des côtés opposés, aux projections de deux secondes génératrices respectives (G2) appartenant à une paire de seconds éléments de coupe correspondants (6) contigus au premier élément de coupe (5) et les projections d'une seconde génératrice de coupe (G2) sur le plan horizontal, appartenant à un second élément de coupe (6), sont tangentes ou sécantes, sur des côtés opposés, aux projections de deux premières génératrices respectives (G1) appartenant à une paire de premiers éléments de coupe correspondants (5) contigus au second élément de coupe (6).

6. Tête (1) selon l'une quelconque des revendications précédentes, dans laquelle la première et la seconde pluralité d'éléments de coupe (5) sont définis par des éléments discoïdes, chacun ayant une pluralité de dents (7) sur sa périphérie.

7. Tête (1) selon la revendication 1, dans laquelle ledit élément de support (2) comprend :
- un élément supérieur (8), ayant de préférence une forme discoïde et ayant une pluralité de sièges supérieurs (9) ;
- un élément intermédiaire (10), couplé à l'élément supérieur (8), ayant sur un premier côté (11), faisant face à l'élément supérieur (8), une pluralité de sièges intermédiaires supérieurs (12) et, sur un second côté (13), opposé au premier côté (11), une pluralité de sièges intermédiaires inférieurs (14) ; ladite pluralité de sièges supérieurs (9) et ladite pluralité de sièges intermédiaires supérieurs (12) retenant à l'intérieur de ceux-ci la série de premières broches (3) grâce à l'accouplement de l'élément intermédiaire (10) à l'élément supérieur (8) ;
- un élément inférieur (15), de préférence de forme discoïde, faisant face au second côté (13) et couplé à l'élément intermédiaire (10) et ayant une pluralité de sièges inférieurs (16) ; ladite pluralité de sièges inférieurs (16) et ladite pluralité de sièges intermédiaires inférieurs (14) retenant à l'intérieur de ceux-ci la série de secondes broches (4) grâce à l'accouplement de l'élément intermédiaire (10) à l'élément inférieur (15).

8. Tête (1) selon la revendication 1, dans laquelle ladite première et ladite seconde pluralité d'éléments de coupe (5, 6) comprennent chacune un nombre d'éléments de coupe compris entre 3 et 6, de préférence 4 éléments de coupe pour chaque pluralité d'éléments de coupe (5, 6).

9. Tête (1) selon la revendication 1, dans laquelle ledit premier plan de coupe (P1) est réglé à une distance du second plan de coupe (P2) comprise entre 0,5 et 10 mm.
